# EUROPEAN PATENT SPECIFICATION

(11) **EP 4 227 164 B1**
(45) Date of publication and mention of the grant of the patent: **29.01.2025**
(21) Application number: 22156797.7
(22) Date of filing: 15.02.2022
(51) Int. Cl.: B60R 11/04

(54) **A VEHICLE CAMERA ARRANGEMENT, A VEHICLE CAMERA MODULE AND A VEHICLE CAMERA MOUNTING BRACKET**
FAHRZEUGKAMERAANORDNUNG, FAHRZEUGKAMERAMODUL UND FAHRZEUGKAMERABEFESTIGUNGSHALTER
AGENCEMENT DE CAMÉRA DE VÉHICULE, MODULE DE CAMÉRA DE VÉHICULE ET SUPPORT DE MONTAGE DE CAMÉRA DE VÉHICULE

(43) Date of publication of application: 16.08.2023
(73) Proprietor: Magna Electronics Sweden AB, 447 37 Vårgårda (SE)
(72) Inventor: ALM, Gustav, Vårgårda (SE); HUBER, Morgan, Vårgårda (SE)
(74) Representative: Westpatent AB

(56) References cited:
- EP-A1- 2 965 949
- EP-A1- 3 527 429
- EP-A1- 3 770 021
- WO-A1-2021/038201
- JP-A- 2013 186 278
- US-B2- 10 556 553

## Description

The present disclosure relates to a vehicle camera module and a vehicle camera mounting bracket, and to a vehicle camera arrangement comprising the vehicle camera module and the vehicle camera mounting bracket.

Many vehicle environment detection systems comprise one or more sensors such as for example radar sensor, LIDAR sensors, ultrasonic sensors and digital camera devices. These are used for collecting data used for safety arrangements as well as for driver assistance systems. A camera device is adapted to collect images of the surroundings, and may be used to identify landmarks.

For a digital camera device, that can be in the form of, or comprised in, a vehicle imaging system, a camera module is mounted to a camera mounting bracket that in turn is mounted to a vehicle. The camera module comprises a housing, a lens assembly and a PCB to which an image sensor and associated components are mounted.

US 10 556 553 B2 discloses a vehicle camera mounting module and bracket corresponding to the preamble of claims 1 and 7.

EP 3 770 021 A discloses a further vehicle camera mounting bracket corresponding to the preamble of claim 7.

It is an object of the present disclosure to provide means for a secure, efficient and reliable mounting of the camera module to the camera mounting bracket and thus to a vehicle.

Said object is achieved by means of a vehicle camera module
according to claim 1. The camera module comprises a housing with a rear portion and a front portion that is adapted to face a vehicle windscreen, and a lens assembly that at least partly is accommodated in the housing. The lens assembly extends along a first extension and comprises a lens aperture that is closer to the front portion than to the rear portion. The housing comprises a first holding section and a second holding section which holding sections protrude away from the first extension. The housing further comprises at least one holding rail extending between the rear portion and the front portion.

This enables the housing to be attached to another item, such as a camera mounting bracket. By means of the holding sections and said at least one holding rail, a secure attachment is enabled, where the holding sections and said at least one holding rail can be integrated into the housing.

According to some aspects, the holding sections extend along a second extension that runs perpendicular to a vertical plane running along the first extension.

In this way, the holding sections are arranged along a line which will enable an uncomplicated mounting to another item, such as a camera mounting bracket.

According to some aspects, each holding section comprises a corresponding inner part and outer part. Each inner part is closer to the vertical plane than the corresponding outer part.

According to some aspects, each inner part has a largest cross-section area that falls below a largest cross-section area of the corresponding outer part in a corresponding plane perpendicular to the second extension.

This will provide a secure locking along the second extension when the vehicle camera module is mounted to another item. In particular, the outer parts will provide locking along the second extension.

According to some aspects, the housing further comprises at least one guiding rail that extends between the rear portion and the front portion. In this way, an increased stability is provided. Said object is also achieved by means of a vehicle camera mounting bracket according to claim 7. The vehicle mounting bracket comprises a main plate with a longitudinal extension, a first main side that is adapted to be attached to a windscreen, and a second main side, opposite the first main side. The mounting bracket comprises a first holding arrangement and a second holding arrangement, the holding arrangements mainly extending parallel to the longitudinal extension and extending from the second main side. Each holding arrangement comprises a first hook-shaped receiving portion and a second hook-shaped receiving portion. The receiving portions are adapted to receive and releasably retain holding parts of a vehicle camera module.

This means that the first hook-shaped receiving portions can engage the holding parts according to the above

According to the invention, the vehicle camera mounting bracket further comprises at least one resilient member that extends from the second main side.

According to some aspects, each holding arrangement comprises a corresponding guiding portion that is adapted to guide guiding rails of a vehicle camera module. This way, mounting of a vehicle camera module to the vehicle camera mounting bracket is simplified.

According to some aspects, each holding arrangement comprises a corresponding groove extending along its holding arrangement.

The grooves are adapted to guide guide protrusions of a vehicle camera module towards the corresponding second hook-shaped receiving portion.

According to some aspects, the second hook-shaped receiving portions are resilient. In this way, holding rails of a vehicle camera module can be engaged in a retaining manner.

This object is also achieved by means of vehicle camera arrangements comprising the vehicle camera module and the vehicle camera mounting bracket according to the above, and also methods, which all are associated with the above advantages.

### BRIEF DESCRIPTION OF THE DRAWINGS

The present disclosure will now be described more in detail with reference to the appended drawings, where:
- Figure 1: shows a schematic cut-open part of a vehicle with a camera device;
- Figure 2A: shows a schematic perspective front view of a vehicle camera module according to a first example;
- Figure 2B: shows details of a holding section;
- Figure 3: shows a schematic top view of the vehicle camera module;
- Figure 4: shows a schematic front view of the vehicle camera module;
- Figure 5: shows a schematic side view of the vehicle camera module;
- Figure 6: shows a schematic perspective back view of a vehicle camera mounting bracket according to a first example;
- Figure 7: shows a schematic side view of the vehicle camera mounting bracket;
- Figure 8: shows a schematic perspective front view of a vehicle camera arrangement according to a first example;
- Figure 9: shows a schematic perspective back view of the vehicle camera arrangement;
- Figure 10: shows a schematic side view of the vehicle camera arrangement;
- Figure 11: shows a schematic perspective front view of an alternative vehicle camera arrangement;
- Figure 12: shows a schematic perspective front view of a vehicle camera module according to a second example;
- Figure 13: shows a schematic perspective back view of a vehicle camera mounting bracket according to a second example;
- Figure 14: shows a schematic side view of a camera arrangement according to the second example;
- Figure 15: shows a schematic perspective front view of a vehicle camera module with a light trap;
- Figure 16: shows a schematic perspective rear view of a vehicle camera module with a light trap;
- Figure 17: shows a schematic perspective front view of a vehicle camera module housing according to a third example;
- Figure 18: shows a schematic side view of a vehicle camera arrangement at a first mounting step;
- Figure 19: shows a schematic side view of a vehicle camera arrangement at a second mounting step; and
- Figure 20: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

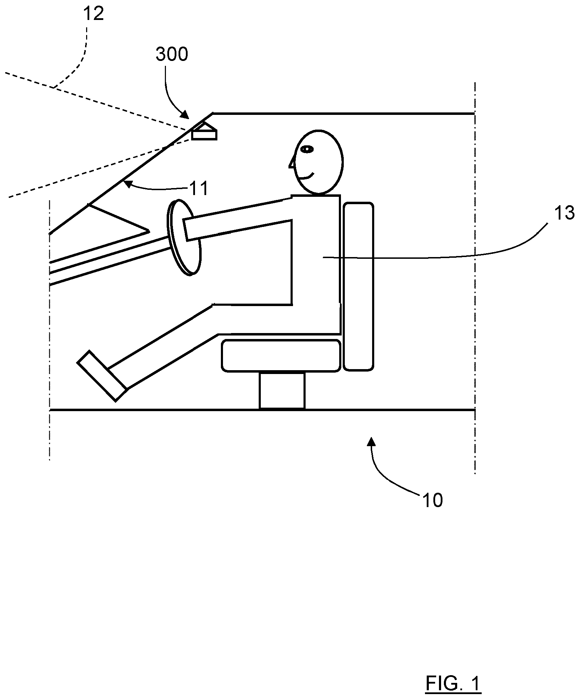

Figure 1 schematically shows a cut-open part of a vehicle 10, where the vehicle 10 comprises a vehicle camera arrangement 300 attached to a vehicle windscreen 11. The vehicle camera arrangement 300 is arranged for capturing images of the surroundings outside the vehicle 10 by means of a certain field of view 12. The vehicle camera arrangement 300 can also, or alternatively, be arranged for capturing images of a driver 13, where these images, which may include eye movements, for example can be used for detecting a degree of driver drowsiness.

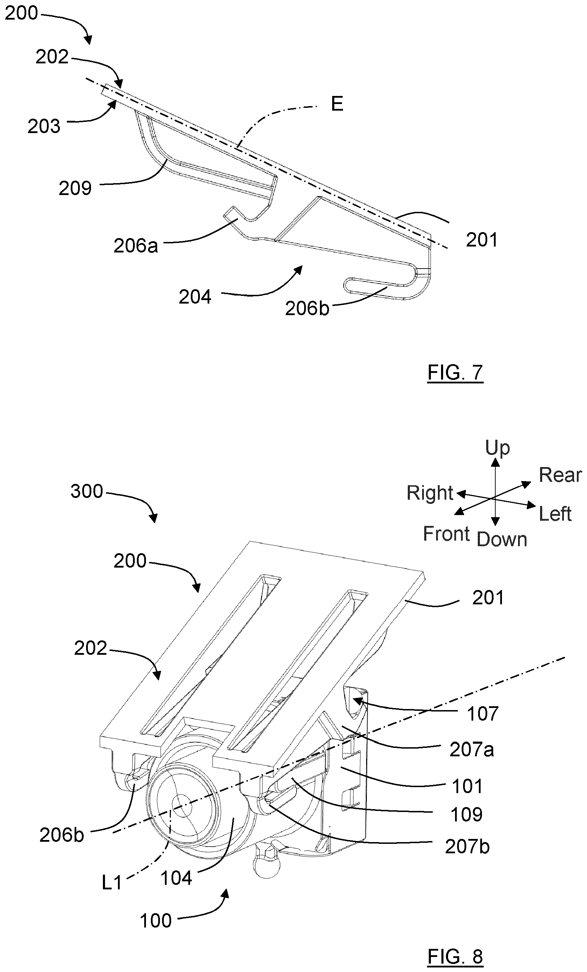

As shown in Figure 8 - Figure 10, the vehicle camera arrangement 300 comprises a vehicle camera module 100 and a vehicle camera mounting bracket 200, and the present disclosure is directed to the vehicle camera arrangement 300 as well as to the vehicle camera module 100 and the vehicle camera mounting bracket 200 separately.

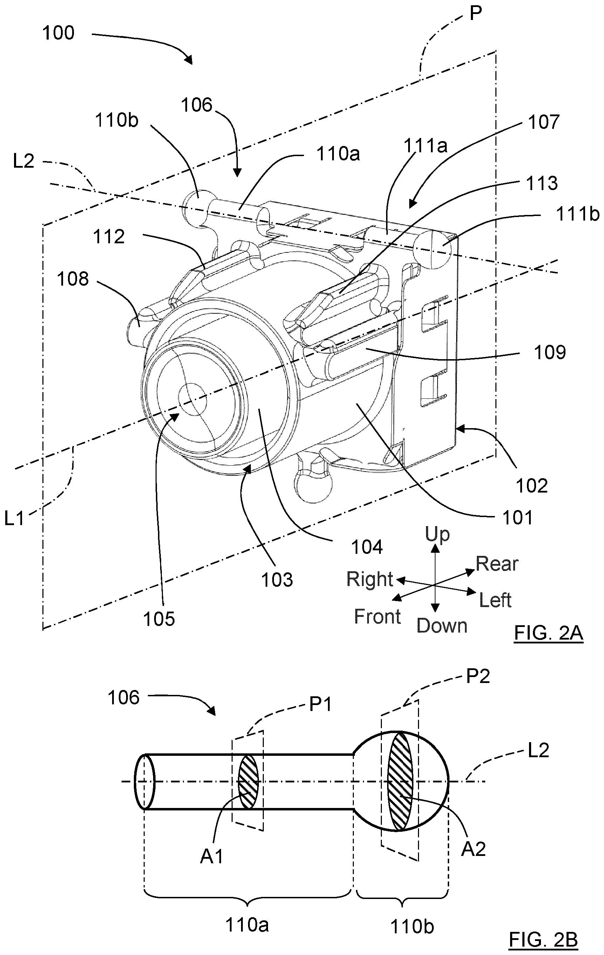

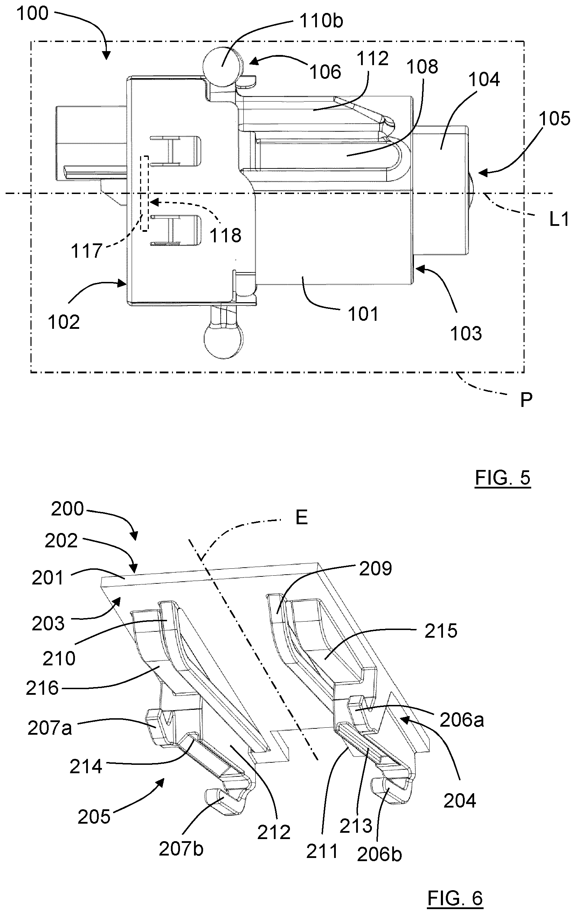

In the following, a first example the vehicle camera module 100 will be described with reference to Figure 2 - Figure 5, and then a corresponding vehicle camera mounting bracket 200 will be described with reference to Figure 6 and Figure 7.

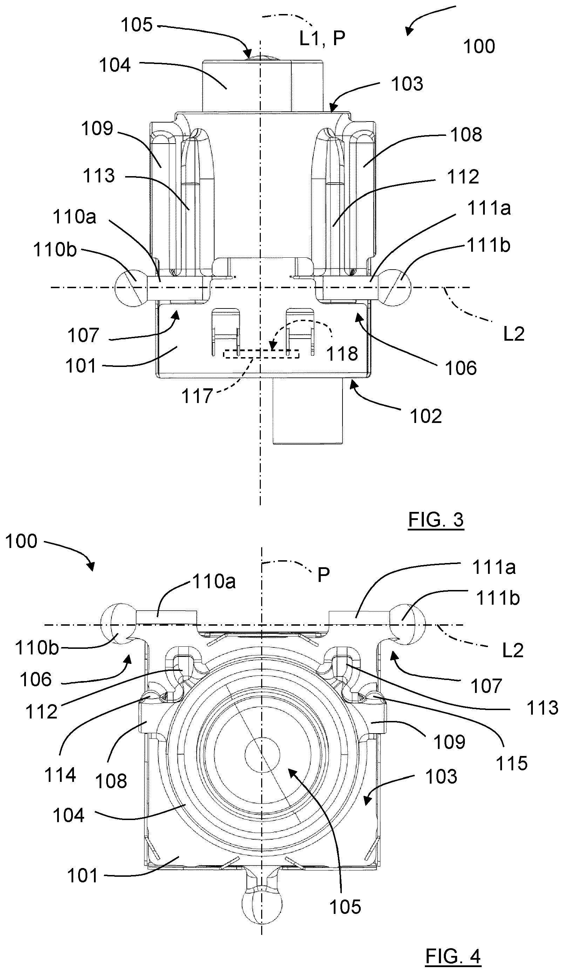

Figure 2A shows a schematic perspective front view of a vehicle camera module 100 according to a first example, Figure 2B shows details of a holding section 106, Figure 3 shows a schematic top view of the vehicle camera module 100, Figure 4 shows a schematic front view of the vehicle camera module 100, and Figure 5 shows a schematic side view of the vehicle camera module 100.

The vehicle camera module 100 comprises a housing 101 with a rear portion 102 and a front portion 103 that is adapted to face the vehicle windscreen 11. The vehicle camera module 100 further comprises a lens assembly 104 that at least partly is accommodated in the housing 101, and where the lens assembly 104 extends along a first extension L1 and comprises a lens aperture 105 that is closer to the front portion 103 than to the rear portion 102.

According to some aspects, an image sensor 117 is accommodated in the housing 101, where the image sensor 117 comprises an imaging surface 118 that is adapted to capture images that are transferred via the lens assembly 104. According to some aspects, the first extension L1 runs perpendicular to the imaging surface 118, where a front-rear direction runs along the first extension L1 from the image sensor 117 towards the lens assembly 104.

According to the present disclosure, the housing 101 comprises a first holding section 106 and a second holding section 107 which holding sections 106, 107 protrude away from the first extension L1, where the housing 101 further comprises at least one holding rail 108, 109 extending between the rear portion 102 and the front portion 103. According to some aspects, the holding rail 108, 109 extend in the rear to front direction.

This enables the housing 101 to be attached to another item, such as a camera mounting bracket that will be described later. By means of the holding sections 106, 107 and said at least one holding rail 108, 109, a secure attachment is enabled, where the holding sections 106, 107 and said at least one holding rail 108, 109 can be integrated into the housing 101.

According to some aspects, the holding sections 106, 107 extend along a second extension L2 that runs perpendicular to a vertical plane P running along the first extension L1, the second extension L2 running in a left-right direction. An up-down direction runs perpendicular to the front-rear direction and the left-right direction. These directions are indicated in Figure 2A, Figure 8 and Figure 12. The vertical plane P divides the lens assembly 104 into two parts that according to some aspects are symmetrical. In this way, the holding sections 106, 107 are arranged along a line which will enable an uncomplicated mounting to another item, such as a camera mounting bracket.

According to some aspects, each holding section 106, 107 comprises a corresponding inner part 110a, 111a and outer part 110b, 111b, where each inner part 110a, 111a is closer to the vertical plane P than the corresponding outer part 110b, 111b. According to some further aspects, as indicated in Figure 2B, each inner part 110a, 111a has a largest cross-section area A1 that falls below a largest cross-section area A2 of the corresponding outer part 110b, 111b in a corresponding plane P1, P2 perpendicular to the second extension L2. It is to be noted that Figure 2B shows the first holding section 106 as a separate part, it can of course be integrated with the housing as for example depicted in Figure 2A.

The outer parts 110b, 111b, thus a having a larger dimension, will provide a secure locking along the second extension L2 when the vehicle camera module 100 is mounted to another item. In particular, the outer parts 110b, 111b provide locking along the second extension L2. The locking depends on how the bracket is designed.

According to some aspects, each holding rail 108, 109 comprises a corresponding guide protrusion 114, 115. The intended function of the guide protrusions 114, 115 will be discussed more later.

According to some aspects, the housing 101 further comprises at least one guiding rail 112, 113 that extends between the rear portion 102 and the front portion 103. In this way, an increased stability is provided.

The vehicle camera module 100 is adapted to be mounted to a vehicle camera mounting bracket 200 which now will be described more in detail. Figure 6 shows a schematic perspective back view of a vehicle camera mounting bracket according to a first example, and Figure 7 shows a schematic side view of the vehicle camera mounting bracket 200.

The vehicle camera mounting bracket 200 comprises a main plate 201 with a longitudinal extension E, a first main side 202 that is adapted to be attached to a windscreen 11, and a second main side 203, opposite the first main side 202. The mounting bracket 200 comprises a first holding arrangement 204 and a second holding arrangement 205, the holding arrangements 204, 205 mainly extending parallel to the longitudinal extension E and extending from the second main side 203.

In accordance with the present disclosure, each holding arrangement 204, 205 comprises a first hook-shaped receiving portion 206a, 207a and a second hook-shaped receiving portion 206b, 207b, where the receiving portions 206a, 207a; 206b, 207b are adapted to receive and releasably retain holding parts 106, 107 and holding rails 108, 109 of a vehicle camera module 101 according to the above.

This means that the first hook-shaped receiving portions 206a, 207a can engage the holding parts 106, 107 according to the above. The first hook-shaped receiving portions 206a, 207a comprises a first outer hook-shaped receiving portion 206a and a second outer hook-shaped receiving portion 207a, the first outer hook-shaped receiving portion 206a being adapted to engage the first holding part 106, and the second outer hook-shaped receiving portion 207a being adapted to engage the second holding part 107. The second hook-shaped receiving portions 206b, 207b comprises a first inner hook-shaped receiving portion 206b and a second inner hook-shaped receiving portion 207b, the first inner hook-shaped receiving portion 206b being adapted to engage and guide a first holding rail 108 and the second inner hook-shaped receiving portion 207b being adapted to engage and guide a second holding rail 109. According to some aspects, the second hook-shaped receiving portions 206b, 207b are resilient, such that the holding rails 108, 109 can be engaged in a retaining manner.

In this context, an inner portion is adapted be closer to a windscreen 11 than an outer portion.

According to some aspects, the vehicle camera mounting bracket 300 further comprises at least one resilient member 209, 210 that extends from the second main side 203. Here, there is a first resilient member 209 and a second resilient member, where, during mounting of the vehicle camera module 100 to the vehicle camera mounting bracket 200, a first inner part 110a of the first holding part 106 is adapted to press the first resilient member 209 towards the second main side 203, and where a second inner part 111a of the second holding part 107 is adapted to press the second resilient member 210 towards the second main side 203.

According to some aspects, the vehicle camera mounting bracket 300 further comprises one or more limiting ridges 215, 216 that extend from the second main side 203 and are adapted to limit the extent to which the resilient members 209, 210 can be pressed towards the second main side 203. In this manner, the resilient members 209, 210 are prevented from being deformed during mounting.

According to some aspects, each holding arrangement 204, 205 comprises a corresponding guiding portion 211, 212 that is adapted to guide guiding rails of a vehicle camera module. Here, there is a first guiding portion 211 and a second guiding portion 212, where the first guiding portion 211 is adapted to engage and guide a first guiding rail 112, and where the second guiding portion 212 is adapted to engage and guide a second guiding rail 113. The guiding rails 112, 113 are comprised in the housing 101 of the vehicle camera module 100 according to the above. This way, mounting of the vehicle camera module 100 to the vehicle camera mounting bracket 300 is simplified.

According to some aspects, each holding arrangement 204, 205 comprises a corresponding groove 213, 214 extending along its holding arrangement 204, 205, the grooves 204, 205 being adapted to guide guide protrusions of a vehicle camera module towards the corresponding second hook-shaped receiving portion 206b, 207b. Here, the first holding arrangement 204 comprises a first groove 213 and the second holding arrangement 205 comprises a second groove 214. The first groove 213 is adapted to engage and guide a first guide protrusion 114, and the second groove 214 is adapted to engage and guide a second guide protrusion 115. In this example, the grooves 204, 205 have the same shape.

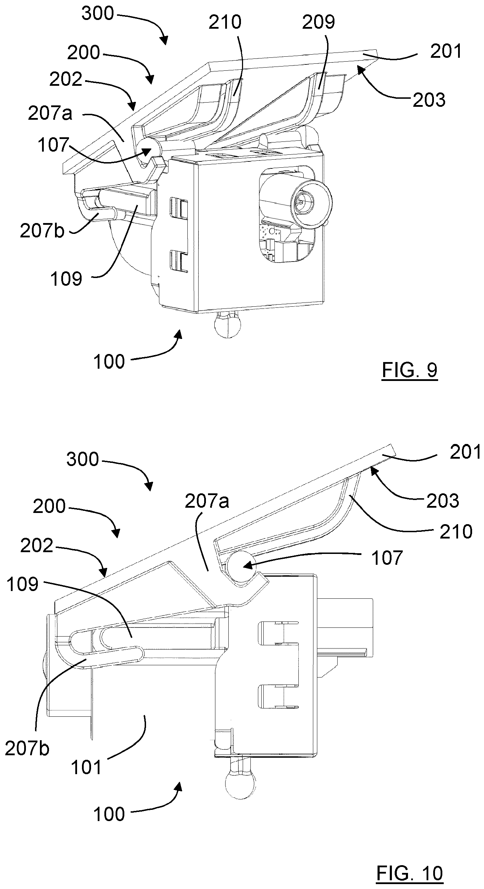

When the vehicle camera module 100 is mounted to the vehicle camera mounting bracket 200, the vehicle camera arrangement 300 is formed as shown in Figure 8 that shows a schematic perspective front view of a vehicle camera arrangement according to a first example, Figure 9 that shows a schematic perspective back view of the vehicle camera arrangement, and Figure 10 that shows a schematic side view of the vehicle camera arrangement.

The vehicle camera arrangement 300 comprises the vehicle camera module 100 according to the above and the vehicle camera mounting bracket 200 according to the above, where the first hook-shaped receiving portions 206a, 207a have received a corresponding holding section 106, 107, and where the second hook-shaped receiving portions 206b, 207b have received a corresponding holding rail 108, 109.

According to some aspects, said resilient member 209, 210 presses against at least one holding section 106, 107 such that the holding sections 106, 107 are retained in the first hook-shaped receiving portions 206a, 207a. Here, the first resilient member 209 presses against the first inner part 110a of the first holding part 106, and the second resilient member 210 presses against the second inner part 111a of the second holding part 107. In this manner, the vehicle camera module 100 is securely retained in the vehicle camera mounting bracket 200, and in particular the holding sections 106, 107 are securely retained in the first hook-shaped receiving portions 206a, 207a.

According to some aspects, the second hook-shaped receiving portions 206b, 207b resiliently press against the holding rails 108, 109.

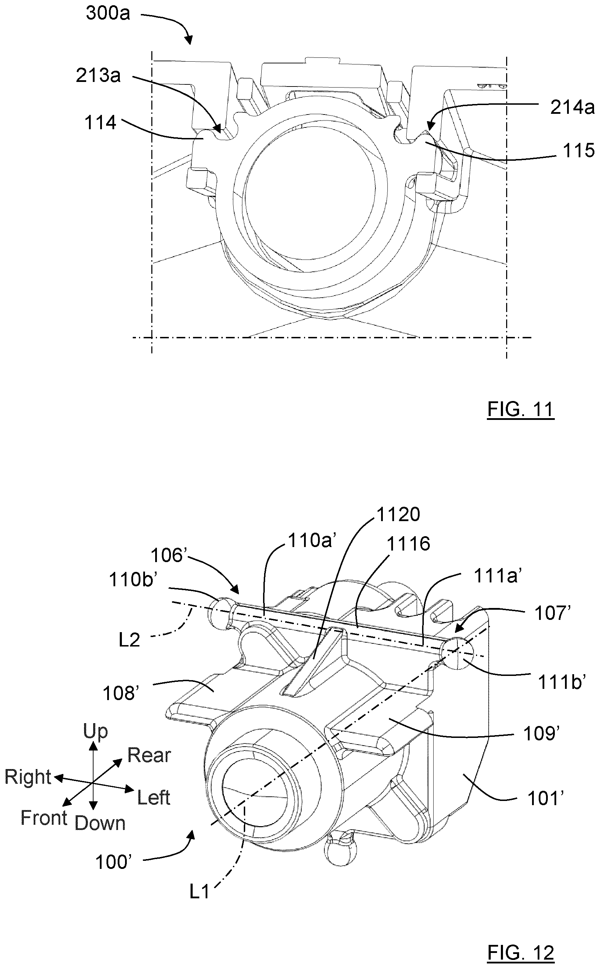

Figure 11 shows a perspective front view of an alternative vehicle camera arrangement illustrates alternative grooves. There is an alternative camera mounting bracket 300a where a first groove 213a is flat and a second groove 214a is V-shaped, where the guide protrusions 114, 115 have been received in a respective groove 213a, 214a.

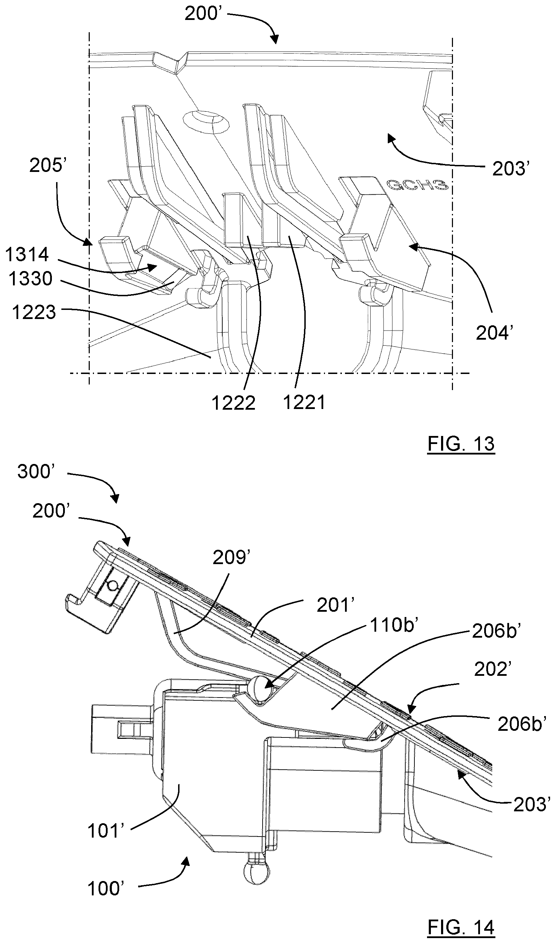

Figure 12 - Figure 14 illustrate a second example of a vehicle camera arrangement, where Figure 12 shows a schematic perspective front view of a vehicle camera module 100' according to the second example, Figure 13 shows a schematic perspective back view of a vehicle camera mounting bracket 200' according to the second example, and Figure 14 shows a schematic side view of a camera arrangement according to the second example.

According to some aspects, the inner parts 110a', 111a' are comprised in a common rod 1116 that runs along the second extension L2. This provides increased stability.

According to some aspects, the housing 101' further comprises a wedge-shaped guide portion 1120 that has a dimension that increases from the front portion 103 to the rear portion 102. This facilitates insertion in the bracket.

According to some aspects, the vehicle camera mounting bracket 200' further comprises at least one wedge-shaped guide portion 1221, 1222 that extends from the second main side 203' and is adapted to guide the wedge-shaped guide portion 1120 of the vehicle camera module 100'. This means that insertion in the bracket is facilitated since the housing 101' can be easily guided into the correct position when mounted to the camera mounting bracket 200'.

The above parts can be used in combination with, or instead of, the guiding portions 211, 212 and the guiding rails 112, 113 described above.

According to some aspects, each corresponding grove 1314 comprises a corresponding bulge 1330 that is adapted to get in retaining contact with a corresponding holding rail of a vehicle camera module. This means that each bulge 1330 will press against a corresponding holding rail 108', 109' of the camera module 100'.

Here, the camera module 100' is secured against the mounting bracket 200' both in the up-down direction and in the left-right direction.

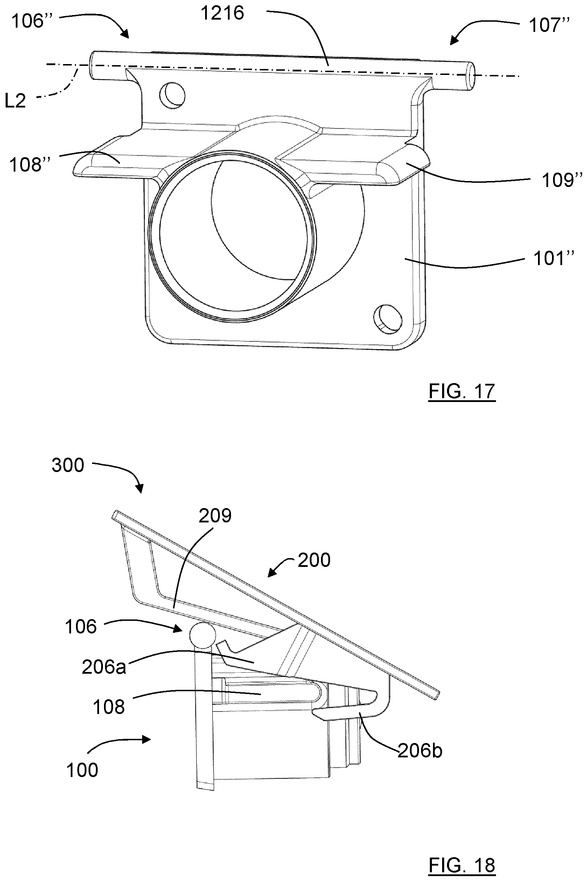

Figure 17 shows a schematic perspective front view of a vehicle camera module housing part according to a third example. Here, according to some aspects, the holding sections 106'', 107" are constituted by a common rod 1216 that runs along the second extension L2.

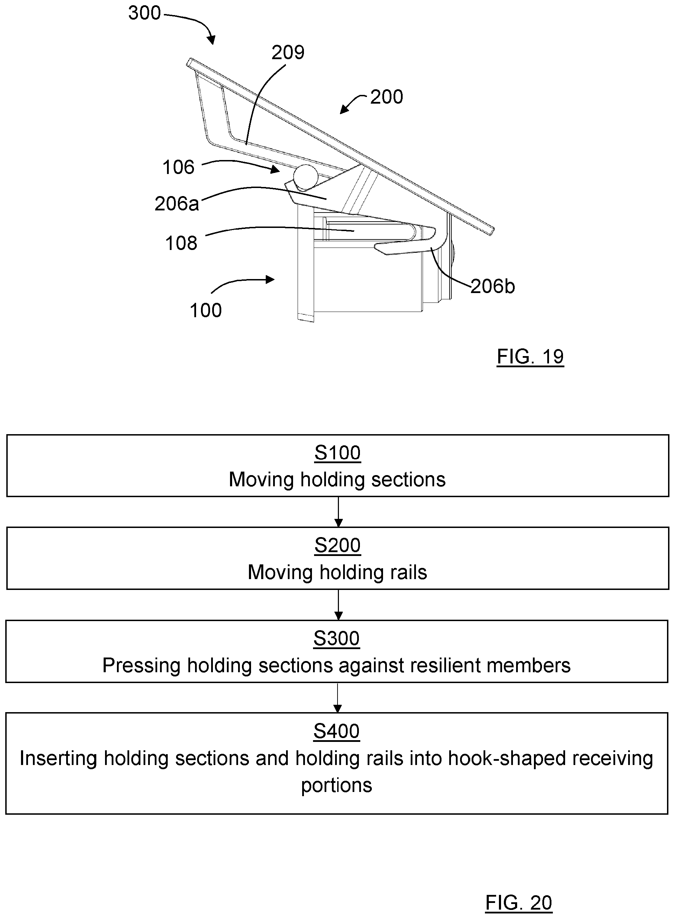

The mounting of the vehicle camera module 100 to the vehicle camera mounting bracket 200 will now be described with reference to Figure 18 that shows a schematic side view of a vehicle camera arrangement at a first mounting step, Figure 19 that shows a schematic side view of a vehicle camera arrangement at a second mounting step, and Figure 20 that shows a flowchart for methods according to the present disclosure.

The present disclosure thus relates to a method for mounting a vehicle camera module 100 according to the above, to a vehicle camera mounting bracket according to the above. The method comprises moving S100 the holding sections 106, 107 towards the first hook-shaped receiving portions 206a, 207a, moving S200 the holding rails 108, 109 towards the second hook-shaped receiving portions 206b, 207b and pressing S300 the holding sections 106, 107 against the resilient members 209, 210 such that the resilient members 209, 210 admit passage of the holding sections 106, 107 as indicated in Figure 18. The method further comprises inserting S400 the holding sections 106, 107 and holding rails 108, 109 into the corresponding hook-shaped receiving portions 206a, 207a; 206b, 207b such that the resilient members 209, 210 press against the holding sections 106, 107 to be releasably retained in the first hook-shaped receiving portions 206a, 207a as indicated in Figure 19.

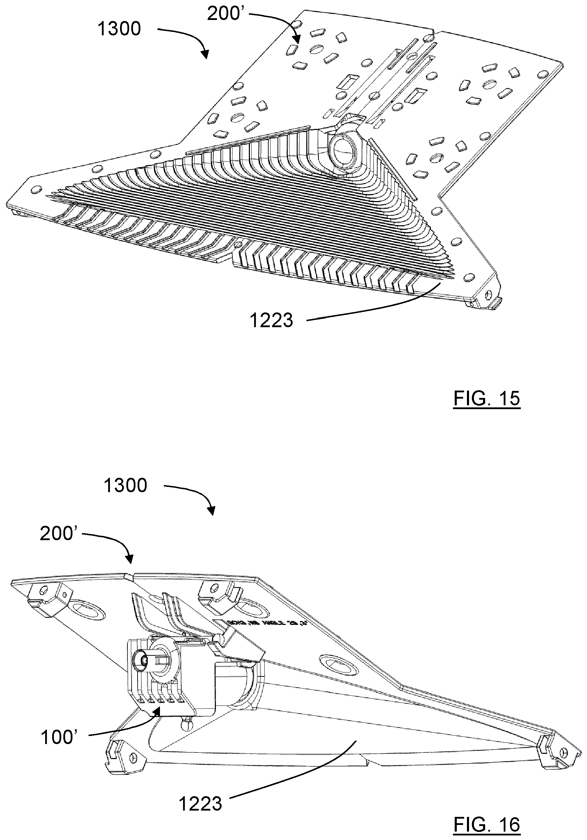

The present disclosure is not limited to the examples above, but may vary freely within the scope of the appended claims. For example, the vehicle camera arrangement 1300 can further be equipped with a light trap 1223 as shown in Figure 15 that shows a schematic perspective front view of a vehicle camera module 101' with a light trap 1223 and Figure 16 that shows a schematic perspective rear view of a vehicle camera module 101' with a light trap 1223.

The light trap 1223 is attached to the vehicle camera mounting bracket 200' such that the vehicle camera mounting bracket 200' is equipped with the light trap 1223. The mounting direction of the vehicle camera module 101' will allow the lens assembly to enter an opening in the light trap 1223.

## Claims

1. A vehicle camera module (100) that comprises a housing (101) with a rear portion (102) and a front portion (103) that is adapted to face a vehicle windscreen, and a lens assembly (104) that at least partly is accommodated in the housing (101), and where the lens assembly (104) extends along a first extension (L1) and comprises a lens aperture (105) that is closer to the front portion (103) than to the rear portion (104), the housing (101) comprises a first holding section (106) and a second holding section (107) which holding sections (106, 107) protrude away from the first extension (L1), **characterized in that** the housing (101) further comprises at least one holding rail (108, 109) extending between the rear portion (102) and the front portion (103) and being adapted to be engaged by corresponding second hook-shaped receiving portions (206b, 207b) comprised in a vehicle camera mounting bracket (200) .

2. The vehicle camera module (100) according to claim 1, wherein the holding sections (106, 107) extend along a second extension (L2) that runs perpendicular to a vertical plane (P) running along the first extension (L1).

3. The vehicle camera module (100) according to claim 2, wherein each holding section (106, 107) comprises a corresponding inner part (110a, 111a) and outer part (110b, 111b), where each inner part (110a, 111a) is closer to the vertical plane (P) than the corresponding outer part (110b, 111b) .

4. The vehicle camera module (100) according to claim 3, wherein each inner part (110a, 111a) has a largest cross-section area (A1) that falls below a largest cross-section area (A2) of the corresponding outer part (110b, 111b) in a corresponding plane (P1, P2) perpendicular to the second extension (L2).

5. The vehicle camera module (100) according to any one of the previous claims, wherein each holding rail (108, 109) comprises a corresponding guide protrusion (114, 115).

6. The vehicle camera module (100) according to any one of the previous claims, wherein the housing (101) further comprises at least one guiding rail (112, 113) that extends between the rear portion (102) and the front portion (103).

7. A vehicle camera mounting bracket (200) comprising a main plate (201) with a longitudinal extension (E), a first main side (202) that is adapted to be attached to a windscreen (11), and a second main side (203), opposite the first main side (202), where the mounting bracket (200) comprises a first holding arrangement (204) and a second holding arrangement (205), the holding arrangements (204, 205) mainly extending parallel to the longitudinal extension (E) and extending from the second main side (203), each holding arrangement (204, 205) comprises a first hook-shaped receiving portion (206a, 207a) and a second hook-shaped receiving portion (206b, 207b), the receiving portions (206a, 207a; 206b, 207b) being adapted to receive and releasably retain holding parts of a vehicle camera module, **characterized in that** the vehicle camera mounting bracket (200) further comprising at least one resilient member (209, 210) that extends from the second main side (203), and one or more limiting ridges (215, 216) that extend from the second main side (203) and are adapted to limit the extent to which the resilient members (209, 210) can be pressed towards the second main side (203).

8. The vehicle camera mounting bracket (200) according to claim 7, wherein each holding arrangement (204, 205) comprises a corresponding guiding portion (211, 212) that is adapted to guide guiding rails of a vehicle camera module.

9. The vehicle camera mounting bracket (200) according to any one of the claims 7 or 8, wherein each holding arrangement (204, 205) comprises a corresponding groove (213, 214) extending along its holding arrangement (204, 205), the grooves (213, 214) being adapted to guide guide protrusions of a vehicle camera module towards the corresponding second hook-shaped receiving portion (206b, 207b).

10. The vehicle camera mounting bracket (200') according to claim 9, wherein each corresponding groove (1314) comprises a corresponding bulge (1330) that is adapted to get in retaining contact with a corresponding holding rail of a vehicle camera module.

11. The vehicle camera mounting bracket (200) according to any one of the claims 7-10, wherein the second hook-shaped receiving portions (206b, 207b) are resilient.

12. A vehicle camera arrangement (300) comprising the vehicle camera module according to any one of the claims 1-6 and the vehicle camera mounting bracket according to any one of the claims 7-11, where the first hook-shaped receiving portions (206a, 207a) have received a corresponding holding section (106, 107), and where the second hook-shaped receiving portions (206b, 207b) have received a corresponding holding rail (108, 109).

13. The vehicle camera arrangement (300) according to claim 12, wherein said resilient member (209, 210) presses against at least one holding section (106, 107) such that the holding sections (106, 107) are retained in the first hook-shaped receiving portions (206a, 207a).

14. A method for mounting a vehicle camera module (100), according to any one of the claims 1-6, to a vehicle camera mounting bracket, according to any one of the claims 7-11, where the method comprises:
moving (S100) the holding sections (106, 107) towards the first hook-shaped receiving portions (206a, 207a);
moving (S200) the holding rails (108, 109) towards the second hook-shaped receiving portions (206b, 207b);
pressing (S300) the holding sections (106, 107) against the resilient members (209, 210) such that the resilient members (209, 210) admit passage of the holding sections (106, 107);
inserting (S400) the holding sections (106, 107) and holding rails (108, 109) into the corresponding hook-shaped receiving portions (206a, 207a; 206b, 207b) such that the resilient members (209, 210) press against the holding sections (106, 107) to be releasably retained in the first hook-shaped receiving portions (206a, 207a).

## Patentansprüche

1. Fahrzeugkameramodul (100), das ein Gehäuse (101) mit einem hinteren Abschnitt (102) und einem vorderen Abschnitt (103), der angepasst ist, um einer Fahrzeugwindschutzscheibe zugewandt zu sein, und eine Linsenbaugruppe (104) umfasst, die mindestens teilweise in dem Gehäuse (101) untergebracht ist, und wobei sich die Linsenbaugruppe (104) entlang einer ersten Verlängerung (L1) erstreckt und eine Linsenöffnung (105) umfasst, die näher an dem vorderen Abschnitt (103) als an dem hinteren Abschnitt (104) liegt,
wobei das Gehäuse (101) einen ersten Haltebereich (106) und einen zweiten Haltebereich (107) umfasst, wobei die Haltebereiche (106, 107) von der ersten Verlängerung (L1) weg vorstehen,
**dadurch gekennzeichnet, dass**
das Gehäuse (101) ferner mindestens eine Halteschiene (108, 109) umfasst, die sich zwischen dem hinteren Abschnitt (102) und dem vorderen Abschnitt (103) erstreckt, und angepasst ist, um durch entsprechende zweite hakenförmige Aufnahmeabschnitte (206b, 207b), die in einer Fahrzeugkameramontagehalterung (200) enthalten sind, in Eingriff genommen zu werden.

2. Fahrzeugkameramodul (100) nach Anspruch 1,
wobei sich die Haltebereiche (106, 107) entlang einer zweiten Verlängerung (L2) erstrecken, die senkrecht zu einer vertikalen Ebene (P) verläuft, die entlang der ersten Verlängerung (L1) verläuft.

3. Fahrzeugkameramodul (100) nach Anspruch 2,
wobei jeder Haltebereich (106, 107) ein entsprechendes Innenteil (110a, 111a) und Außenteil (110b, 111b) umfasst, wobei jedes Innenteil (110a, 111a) näher an der vertikalen Ebene (P) liegt als das entsprechende Außenteil (110b, 111b).

4. Fahrzeugkameramodul (100) nach Anspruch 3,
wobei jedes Innenteil (110a, 111a) eine größte Querschnittsfläche (A1) aufweist, die eine größte Querschnittsfläche (A2) des entsprechenden Außenteils (110b, 111b) in einer entsprechenden Ebene (P1, P2), die senkrecht zu der zweiten Verlängerung (L2) verläuft, unterschreitet.

5. Fahrzeugkameramodul (100) nach einem der vorstehenden Ansprüche, wobei jede Halteschiene (108, 109) einen entsprechenden Führungsvorsprung (114, 115) umfasst.

6. Fahrzeugkameramodul (100) nach einem der vorstehenden Ansprüche, wobei das Gehäuse (101) ferner mindestens eine Führungsschiene (112, 113) umfasst, die sich zwischen dem hinteren Abschnitt (102) und dem vorderen Abschnitt (103) erstreckt.

7. Fahrzeugkameramontagehalterung (200) umfassend eine Hauptplatte (201) mit einer Längsverlängerung (E), eine erste Hauptseite (202), die angepasst ist, um an einer Windschutzscheibe (11) angebracht zu werden, und eine zweite Hauptseite (203), die der ersten Hauptseite (202) gegenüberliegt, wobei die Montagehalterung (200) eine erste Halteanordnung (204) und eine zweite Halteanordnung (205) umfasst, wobei die Halteanordnungen (204, 205) sich hauptsächlich parallel zu der Längsverlängerung (E) erstrecken und sich von der zweiten Hauptseite (203) erstrecken, wobei jede Halteanordnung (204, 205) einen ersten hakenförmigen Aufnahmeabschnitt (206a, 207a) und einen zweiten hakenförmigen Aufnahmeabschnitt (206b, 207b) umfasst, wobei die Aufnahmeabschnitte (206a, 207a; 206b, 207b) angepasst sind, um Halteteile eines Fahrzeugkameramoduls aufzunehmen und lösbar festzuhalten, **dadurch gekennzeichnet, dass**
die Fahrzeugkameramontagehalterung (200) ferner umfassend mindestens ein elastisches Element (209, 210), das sich von der zweiten Hauptseite (203) erstreckt, und eine oder mehrere Begrenzungsrippen (215, 216), die sich von der zweiten Hauptseite (203) erstrecken und angepasst sind, um das Ausmaß zu begrenzen, in dem die elastischen Elemente (209, 210) zu der zweiten Hauptseite (203) hin gedrückt werden können.

8. Fahrzeugkameramontagehalterung (200) nach Anspruch 7, wobei jede Halteanordnung (204, 205) einen entsprechenden Führungsabschnitt (211, 212) umfasst, der angepasst ist, um Führungsschienen eines Fahrzeugkameramoduls zu führen.

9. Fahrzeugkameramontagehalterung (200) nach einem der Ansprüche 7 oder 8, wobei jede Halteanordnung (204, 205) eine entsprechende Nut (213, 214) umfasst, die sich entlang ihrer Halteanordnung (204, 205) erstreckt, wobei die Nuten (213, 214) angepasst sind, um Führungsvorsprünge eines Fahrzeugkameramoduls zu dem entsprechenden zweiten hakenförmigen Aufnahmeabschnitt (206b, 207b) hin zu führen.

10. Fahrzeugkameramontagehalterung (200') nach Anspruch 9, wobei jede entsprechende Nut (1314) eine entsprechende Ausbuchtung (1330) umfasst, die angepasst ist, um in Festhaltekontakt mit einer entsprechenden Halteschiene eines Fahrzeugkameramoduls zu gelangen.

11. Fahrzeugkameramontagehalterung (200) nach einem der Ansprüche 7 bis 10, wobei die zweiten hakenförmigen Aufnahmeabschnitte (206b, 207b) elastisch sind.

12. Fahrzeugkameraanordnung (300), umfassend das Fahrzeugkameramodul nach einem der Ansprüche 1 bis 6, und die Fahrzeugkameramontagehalterung nach einem der Ansprüche 7 bis 11, wobei die ersten hakenförmigen Aufnahmeabschnitte (206a, 207a) einen entsprechenden Haltebereich (106, 107) aufgenommen haben, und wobei die zweiten hakenförmigen Aufnahmeabschnitte (206b, 207b) eine entsprechende Halteschiene (108, 109) aufgenommen haben.

13. Fahrzeugkameraanordnung (300) nach Anspruch 12, wobei das elastische Element (209, 210) gegen mindestens einen Haltebereich (106, 107) drückt, derart, dass die Haltebereiche (106, 107) in den ersten hakenförmigen Aufnahmeabschnitten (206a, 207a) festgehalten werden.

14. Verfahren zum Montieren eines Fahrzeugkameramoduls (100) gemäß einem der Ansprüche 1 bis 6 an einer Fahrzeugkameramontagehalterung nach einem der Ansprüche 7 bis 11, wobei das Verfahren umfasst:
Bewegen (S100) der Haltebereiche (106, 107) zu den ersten hakenförmigen Aufnahmeabschnitten (206a, 207a) hin;
Bewegen (S200) der Halteschienen (108, 109) zu den zweiten hakenförmigen Aufnahmeabschnitten (206b, 207b) hin;
Drücken (S300) der Haltebereiche (106, 107) gegen die elastischen Elemente (209, 210), derart, dass die elastischen Elemente (209, 210) den Durchgang der Haltebereiche (106, 107) zulassen;
Einsetzen (S400) der Haltebereiche (106, 107) und Halteschienen (108, 109) in die entsprechenden hakenförmigen Aufnahmeabschnitte (206a, 207a; 206b, 207b), derart, dass die elastischen Elemente (209, 210) gegen die Haltebereiche (106, 107) drücken, um in den ersten hakenförmigen Aufnahmeabschnitten (206a, 207a) lösbar festgehalten zu werden.

## Revendications

1. Module de caméra de véhicule (100) comprenant un boîtier (101) avec une portion arrière (102) et une portion avant (103) adaptée pour faire face à un pare-brise de véhicule, et un bloc de lentilles (104) qui est au moins partiellement logé dans le boîtier (101), et dans lequel le bloc de lentilles (104) s'étend le long d'une première extension (L1) et comprend une ouverture de diaphragme (105) qui est plus proche de la portion avant (103) que de la portion arrière (104),
le boîtier (101) comprend une première section de retenue (106) et une seconde section de retenue (107), ces sections de retenue (106, 107) faisant saillie par rapport à la première extension (L1),
**caractérisé en ce que**
le boîtier (101) comprend en outre au moins un rail de retenue (108, 109) s'étendant entre la portion arrière (102) et la portion avant (103) et adapté pour être mis en prise par des secondes portions de réception en forme de crochet (206b, 207b) correspondantes comprises dans un support de montage de caméra de véhicule (200).

2. Module de caméra de véhicule (100) selon la revendication 1,
dans lequel les sections de retenue (106, 107) s'étendent le long d'une seconde extension (L2) qui est perpendiculaire à un plan vertical (P) s'étendant le long de la première extension (L1).

3. Module de caméra de véhicule (100) selon la revendication 2,
dans lequel chaque section de retenue (106, 107) comprend une partie intérieure (110a, 111a) et une partie extérieure (110b, 111b) correspondantes, où chaque partie intérieure (110a, 111a) est plus proche du plan vertical (P) que la partie extérieure (110b, 111b) correspondante.

4. Module de caméra de véhicule (100) selon la revendication 3,
dans lequel chaque partie intérieure (110a, 111a) a une plus grande surface de section transversale (A1) qui est inférieure à la plus grande surface de section transversale (A2) de la partie extérieure (110b, 111b) correspondante dans un plan (P1, P2) correspondant perpendiculaire à la seconde extension (L2).

5. Module de caméra de véhicule (100) selon l'une quelconque des revendications précédentes, dans lequel chaque rail de retenue (108, 109) comprend une protubérance de guidage (114, 115) correspondante.

6. Module de caméra de véhicule (100) selon l'une quelconque des revendications précédentes, dans lequel le boîtier (101) comprend en outre au moins un rail de guidage (112, 113) qui s'étend entre la portion arrière (102) et la portion avant (103).

7. Support de montage de caméra de véhicule (200) comprenant une plaque principale (201) avec une extension longitudinale (E), un premier côté principal (202) qui est adapté pour être fixé à un pare-brise (11), et un second côté principal (203), opposé au premier côté principal (202), où le support de montage (200) comprend un premier agencement de retenue (204) et un second agencement de retenue (205), les agencements de retenue (204, 205) s'étendent principalement parallèlement à l'extension longitudinale (E) et à partir du second côté principal (203), chaque agencement de retenue (204,205) comprend une première portion de réception en forme de crochet (206a, 207a) et une seconde portion de réception en forme de crochet (206b, 207b), les portions de réception (206a, 207a ; 206b, 207b) étant adaptées pour recevoir et retenir de manière amovible les pièces de retenue d'un module de caméra de véhicule, **caractérisé en ce que**
le support de montage de caméra de véhicule (200) comprend en outre au moins un élément élastique (209, 210) qui s'étend à partir du second côté principal (203), et une ou plusieurs arêtes de limitation (215, 216) qui s'étendent à partir du second côté principal (203) et sont adaptées pour limiter la mesure dans laquelle les éléments élastiques (209, 210) peuvent être pressés vers le second côté principal (203).

8. Support de montage de caméra de véhicule (200) selon la revendication 7, dans lequel chaque agencement de retenue (204, 205) comprend une portion de guidage (211, 212) correspondante qui est adaptée pour guider des rails de guidage d'un module de caméra de véhicule.

9. Support de montage de caméra de véhicule (200) selon l'une quelconque des revendications 7 ou 8, dans lequel chaque agencement de retenue (204, 205) comprend une rainure (213, 214) correspondante s'étendant le long de son agencement de retenue (204, 205), les rainures (213, 214) étant adaptées pour guider les protubérances de guidage d'un module de caméra de véhicule vers la seconde portion de réception en forme de crochet (206b, 207b) correspondante.

10. Support de montage de caméra de véhicule (200') selon la revendication 9, dans lequel chaque rainure (1314) correspondante comprend un renflement (1330) correspondant qui est adapté pour entrer en contact avec un rail de retenue correspondant d'un module de caméra de véhicule.

11. Support de montage de caméra de véhicule (200) selon l'une quelconque des revendications 7 à 10, dans lequel les secondes portions de réception en forme de crochet (206b, 207b) sont élastiques.

12. Agencement de caméra de véhicule (300) comprenant le module de caméra de véhicule selon l'une quelconque des revendications 1 à 6 et le support de montage de caméra de véhicule selon l'une quelconque des revendications 7 à 11, où les premières portions de réception en forme de crochet (206a, 207a) ont reçu une section de retenue (106, 107) correspondante, et où les secondes portions de réception en forme de crochet (206b, 207b) ont reçu un rail de retenue (108, 109) correspondant.

13. Agencement de caméra de véhicule (300) selon la revendication 12, dans lequel ledit élément élastique (209, 210) fait pression contre au moins une section de retenue (106, 107) de telle sorte que les sections de retenue (106, 107) sont retenues dans les premières portions de réception en forme de crochet (206a, 207a).

14. Procédé de montage d'un module de caméra de véhicule (100), selon l'une quelconque des revendications 1 à 6, sur un support de montage de caméra de véhicule, selon l'une quelconque des revendications 7 à 11, où le procédé comprend :
le déplacement (S100) des sections de retenue (106, 107) vers les premières parties de réception en forme de crochet (206a, 207a) ;
le déplacement (S200) des rails de retenue (108, 109) vers les secondes parties de réception en forme de crochet (206b, 207b) ;
la pression (S300) des sections de retenue (106, 107) contre les éléments élastiques (209, 210) de telle sorte que les éléments élastiques (209, 210) permettent le passage des sections de retenue (106, 107) ;
l'insertion (S400) des sections de retenue (106, 107) et des rails de retenue (108, 109) dans les portions de réception en forme de crochet (206a, 207a ; 206b, 207b) correspondantes de telle sorte que les éléments élastiques (209, 210) se pressent contre les sections de retenue (106, 107) pour être retenus de manière amovible dans les premières portions de réception en forme de crochet (206a, 207a).
